Europäisches Patentamt

European Patent Office

Office européen des brevets

(11) Publication number: **0 070 989**

**B1**

# EUROPEAN PATENT SPECIFICATION

(45) Date of publication of patent specification: **10.12.86**

(51) Int. Cl.⁴: **G 21 F 9/08**

(21) Application number: **82104439.3**

(22) Date of filing: **21.05.82**

(54) Process and apparatus for the volume reduction of pressurized water reactor liquid wastes.

(30) Priority: **26.06.81 US 277579**

(43) Date of publication of application:
**09.02.83 Bulletin 83/06**

(45) Publication of the grant of the patent:
**10.12.86 Bulletin 86/50**

(84) Designated Contracting States:
**BE CH DE FR GB IT LI SE**

(56) References cited:
**DE-A-2 447 471**
**FR-A-2 452 160**
**US-A-1 997 227**

(73) Proprietor: **WESTINGHOUSE ELECTRIC CORPORATION**
**Westinghouse Building Gateway Center**
**Pittsburgh Pennsylvania 15222 (US)**

(72) Inventor: **Kitzes, Arnold Stanley**
**2740 Mount Royal Road**
**Pittsburgh Pennsylvania (US)**
Inventor: **Tiepel, Erich Wilhelm**
**2494 Houston Waring Circle**
**Littleton Colorado (US)**

(74) Representative: **Holzer, Rupprecht, Dipl.-Ing.**
**Philippine-Welser-Strasse 14**
**D-8900 Augsburg (DE)**

EP 0 070 989 B1

Courier Press, Leamington Spa, England.

## Description

The invention is directed to a process and apparatus for the volume reduction of radioactive liquid waste solutions, particularly evaporator waste bottoms containing, for example, either boric acid or sodium sulfate and trace quantities of radioactive materials.

Pressurized Water Reactor (PWR) liquid waste streams potentially contaminated by radioactivity are treated in evaporators for the volume reduction of the waste and the reclamation of a clean condensate. The condensates from these evaporators are monitored and recycled after a polishing/demineralization treatment. The evaporator process affords an approximately fifteen to twenty fold volume reduction of the contaminated wastes. Although this is a significant volume reduction, there still remains a substantial quatity of waste evaporator bottoms which must be disposed of.

U.S.—A—4,119,560 discloses a process of waste volume reduction in which a solution of a liquid solvent and a solid solute is introduced into a hot inert carrier under highly turbulent conditions and at a temperature sufficient to cause the solvent to flash leaving dried dispersed solid particles. In this process, it is then necessary to separate the solid particles from the carrier. Another example of waste treatment is disclosed in U.S.—A—3,507,801 in which a mixture of radioactive waste water and a sodium borate solution is thickened by heating until the remaining quantity of water is small enough to be bondable by the sodium borate as water of crystallization. The apparatus utilized in such a process can experience scaling and corrosion.

After being subjected to a volume reduction process, the evaporator bottoms are packaged for final disposal. Current disposal methods primarily utilize the technique of mixing or absorbing the waste evaporator bottoms with cement, cement-vermiculite or solidifying with urea-formaldehyde and modified water-extendable polyesters in drums. The packaging method must overcome the problems of leaching and possible escape into the disposal environment.

Both the substantial rate of waste production and the potential regulatory restrictions for current disposal methods have pointed to the need for effective methods of waste volume reduction, packaging and disposal. The present invention is directed to a process and apparatus for the efficient volume reduction of liquid waste containing boric acid or sodium sulfate. Because the product rendered by the instant process is in a solid-liquid slurry form, the waste can be readily mixed with a packaging agent such as cement. As a result, the difficulties previously encountered with leaching are significantly reduced, if not totally eliminated.

From DE—A—2 447 471, a process for treatment of a radioactive liquid waste solution using vacuum crystallization is known for the volume reduction of liquid waste produced during chemical processing of uranium ores. This known process includes introducing a charge of hot waste solution into a crystallization unit, cooling said solution in said unit in order to reduce the temperature of the solution to a point at which effective crystallization can occur and applying a vacuum to said unit to draw off vaporised water.

Vacuum crystallization techniques per se are also generally known from US—A—1 997 277.

It is the principal object of this invention to provide a process and an apparatus for the volume reduction of low level nuclear waste in a controlled and economic manner to obtain crystallized waste for proper packaging with an immobilizing agent.

With this object in view, the present invention resides in a process for the volume reduction of a radioactive liquid waste solution, wherein hot solution is introduced into a crystallization unit and cooled to a temperature at which crystallization can occur, and wherein a vacuum is applied to said unit to draw off at least some of the solvent in said solution as a vapor, characterized in that said liquid waste solution contains boric acid or sodium sulfate and an initial charge thereof is introduced into said crystallization unit to fill said unit to a predetermined level, the solution in said unit being cooled to said temperature by circulating it through a cooler unit, and that, while said vacuum is maintained, further hot solution is introduced into said crystallization unit to compensate for the evaporated solvent loss and to maintain said predetermined level until the solution becomes supersaturated and a slurry is generated whereupon circulation of the solution is discontinued while vacuum is maintained to promote crystallization and settling of the crystals formed which are then transferred to a solidification system.

The crystallization system is initially filled with the hot liquid waste solution which is continuously circulated from a conical portion of the crystallization unit through the heat exchanger having a secondary side supplied with the cooling water or plant stream which is then tangentially discharged into the inner chamber by means of a circulation pump. Vacuum is applied to the crystallization unit by means of a vacuum pump is communication with the upper portion of the vessel. The application of a vacuum to the crystallization unit together with the circulation of the hot liquid waste through the heat exchanger cools the hot liquid waste to a temperature at which crystallization could begin if the solution were saturated. Once the temperature of the initial charge of liquid waste has stabilized, additional hot liquid waste is continuously introduced into the circulation pipe upstream of the evaporator. The additional hot liquid waste provides a thermal input into the crystallization system which is partially relieved in the heat exchanger. The combined liquid waste flow is finally cooled to the crystallization temperature of the solute therein by evaporative cooling in the crystallizer unit. The precipitation and growth of crystals occurs in a controlled manner in the bulk fluid phase. The solvent evaporated to maintain the bulk fluid temperature is condensed and returned to a waste holding tank for further processing. The Ph of the liquid waste can be monitored and adjusted if necessary, to the proper range by the addition of an acid.

The circulation of liquid waste through the system is continued until crystallization reaches a predetermined value, in the range of about 20—30%. Circulation and the introduction of additional hot liquid waste is then stopped and the solids are allowed to settle to the bottom portion of the crystallization unit. The settled solid-liquid slurry is then withdrawn from the crystallization system for proper packaging with an immobilizing agent.

After removing most of the slurry, the crystallization system is again filled to a predetermined level with an initial charge of hot liquid waste and additional makeup feed which is continuously circulated through the system. Any crystals remaining in the crystallizer unit from the previous batch act as nuclei to promote crystal growth.

Depending upon the solute in the liquid waste solution, an alternative process for effecting the volume reduction of evaporator bottoms in the apparatus of this invention is evaporative crystallization. The temperature of the waste liquid circulating through the crystallization unit is maintained above about 32°C. Water is boiled off under vacuum to increase the concentration of the solute above the solubility level to precipitate crystals in the crystallization unit.

The invention will become more readily apparent from the following description of a preferred embodiment thereof described, by way of example only, with reference to the accompanying drawings, wherein:

Figure 1 is a schematic diagram of a system for the volume reduction of radioactive liquid water according to this invention;

Figure 2 is a typical boric acid waste stream solubility curve;

Figure 3 is a typical sodium sulfate waste stream solubility curve; and

Figure 4 is a schematic illustration of a crystallizer unit utilized by this invention.

Liquid waste streams from a pressurized water reactor, potentially contaminated by radioactivity are treated in evaporators for the concentration of waste water constituents; both radioactive and non-radioactive. The condensates from these evaporators are monitored and either recycled or discharged after a polishing/demineralization treatment. This results in a substantial volume of evaporator bottoms. The process and apparatus of this invention will be described treating evaporator bottoms comprising a liquid waste solution containing 12% boric acid ($H_3BO_3$) and trace quantities of activity in detail. This description is not meant to limit the process and apparatus to waste containing boric acid since this invention is equally effective in the volume reduction of sodium sulfate wastes concentrated in the waste evaporators. Moreover, it will be seen that the apparatus of this invention can be utilized in a process for the evaporative crystallization of liquid sodium sulfate wastes.

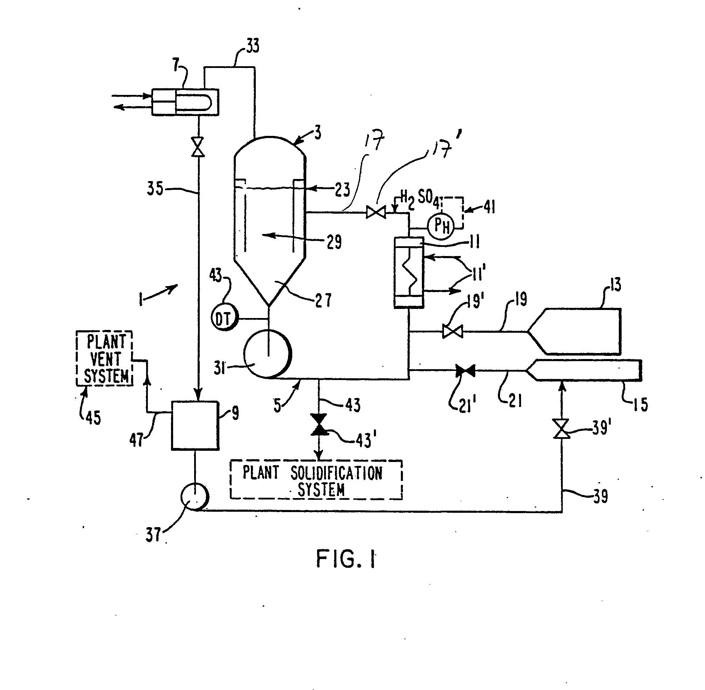

In Figure 1, a system for the volume reduction of waste evaporator bottoms by a vacuum cooled crystallization process or an evaporative crystallization process is generally indicated by the reference character 1 and includes a crystallization unit 3, a circulation system generally indicated at 5, a condenser 7, a vacuum pump 9 and a heat exchanger 11. The waste reduction system 1 is a semi-continuous batch process in which liquid primarily from the waste evaporator bottoms holdup tank 13 is concentrated by vacuum evaporative cooling crystallization before being packaged for disposal.

Hot waste liquids from the waste holdup tank 13 and/or the floor drain tank 15 enter into the main circulation line 17 of the circulation system 5 through feed lines 19 and 21, respectively. Suitable flow control means such as valves 19' and 21' are disposed along the lines 19 and 21 to regulate the flow from these tanks into the feed line 17 so that the crystallization unit 3 is filled to a predetermined level as at 23. The hot waste liquid is circulated from the bottom 27 of the crystallizer unit 3 by a circulation pump 31 through main feed line 17 and heat exchanger 11, and is then introduced tangentially into the inner chamber 29 of the crystallizer unit 3. Vacuum is applied to the crystallizer unit 3 by the vacuum pump 9 which is in communication with the crystallizer unit 3 by means of vacuum lines 33 and 35 and condenser 7 disposed therebetween. The application of cooling water to the secondary side 11' of evaporator 11 together with the vacuum applied to the crystallization unit lowers the hot liquid waste to an ambient temperature of between about 21°C to 35°C. Once the temperature of the initial charge of liquid waste is stabilized, additional hot liquid waste is continuously fed into the circulation line 17 from the waste holdup tank 13 upstream of the heat exchanger 11. The additional hot liquid feed maintains the fluid level in the crystallization unit in spite of the solvent loss due to vacuum evaporative cooling. The thermal input of the additional hot evaporator stream is at least partially eased in the heat exchanger 11. The feed circulation stream flows from the heat exchanger 11 through flow control valve 17' and tangentially enters the inner chamber 29 of the crystallization unit 3 where the liquid is finally cooled to the temperature at which crystallization can begin by evaporative cooling. The continuous circulation of the cooled liquid waste through the crystallization unit and feed line 17 eliminate crystal fouling or freeze-up in the heat exchanger, the circulating pump or the crystallization unit. Such fouling or freeze-up can occur when a solution becomes supersaturated. When nearly saturated hot solution is slowly cooled, the excess solute remains dissolved and the solution becomes supersaturated. Such solutions are unstable and the solute in the solution which exceeds the saturation level of that solution will tend to crystallize until the concentration level of the solute drops to the point of saturation. As will be more fully explained in the description of the apparatus of this invention, the crystallization unit is provided with a quiescent zone where the crystals can partially settle. The continuous flow of fluid through the pipes inhibits the supersaturated fluid from crystallizing therein and interrupting the processing of the liquid waste.

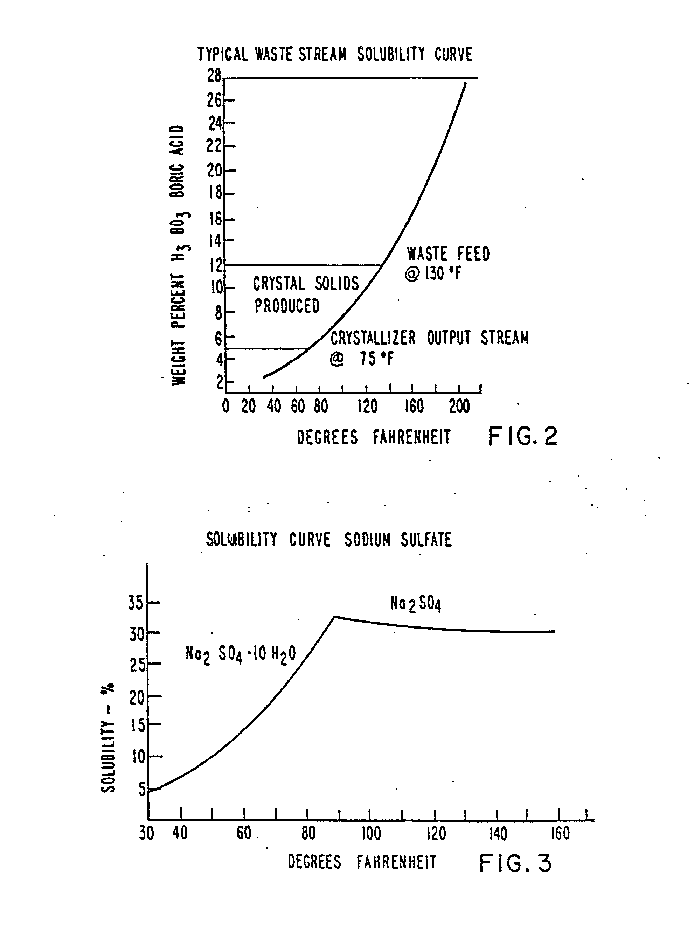

As the liquid waste solution is gradually cooled in the crystallization unit 3 through evaporative cooling under vacuum, a small amount of the solvent, approximately 13% of the feed, is evaporated. When the concentration of the waste liquid solute reaches a supersaturated state, crystallization is initiated and proceeds according to the solubility/temperature curve of Figure 2 as cooling is continued. At ambient temperature, supersaturation is totally relieved and a stable solid-liquid slurry is formed in the crystallization unit. The percipitation and growth of crystals occurs in a controlled manner in the crystallization unit.

The solvent evaporated by the vacuum to maintain bulk fluid temperature, passes through line 33 and into the condenser 7. After condensation, the solvent is returned to a point upstream of the evaporator together with a diluted boric acid solution for reprocessing in the original evaporator, an auxiliary evaporator, ion exchange or through reverse osmosis. Typically, this would be effected by means of a solution return pump 37 which is in communication with the floor drain tank 15 through line 39 and control valve 39'.

The pH of the liquid waste circulating through the crystallization unit 3 can be monitored and adjusted if necessary, to the proper range by the addition of an acid as at 41, downstream to the evaporator 11. Optimally, a low pH in the range of 5 or less is maintained in order to avoid the formation of undesirable compounds during the crystallization process.

The waste liquid is continuously circulated from the bottom 27 of the crystallization unit 3 back into the inner chamber thereof through line 17 until the concentration of crystals reaches a predetermined value of approximately 20—30% and preferably 25%. The concentration can be monitored by a density transmitter 43 proximate the bottom of the crystallizer unit. The operation of the crystallization unit and the crystallization process as it occurs therein will be more fully explained below. When the predetermined density is achieved, circulation of the fluid within the crystallization system is stopped and the solids are allowed to settle in the bottom portion of the crystallizer. The settled crystalline slurry is then removed via pump 31 through discharge line 43 and discharge control valve 43' for packaging with a suitable immobilizing agent.

After the removal of a substantial portion of the crystallized solids in the crystallization unit 3, the treatment of a new batch of hot liquid waste can begin. Any crystals remaining in the crystallization unit 3 act as nuclei which promote crystal growth in the next batch of waste liquid treated. An initial charge of hot liquid waste fills the crystallization unit to a predetermined level and the volume reduction process can begin once again.

Any noncondensible gases that might be produced in the crystallization process are also drawn off by the vacuum pump 9 and transferred to the plant vent system 45 through line 47.

The vacuum cooled crystallization process described above for the volume reduction of liquid waste evaporator bottoms containing about 12% solids boric acid may also be used for the volume reduction of liquid waste evaporator bottoms containing about 20% solids sodium sulfate. Through evaporative cooling crystallization, the sodium sulfate can be recovered as either sodium sulfate decahydrate or a sodium sulfate by the addition of a secondary salt such as sodium chloride to reduce the sodium sulfate solubility.

The preferred method of sodium sulfate removal is an evaporative crystallization process which can be readily effected by the apparatus of this invention. The sodium sulfate ($Na_2SO_4$) solubility curve illustrated in Figure 3 shows that solubility increases as the temperature approaches 32°C. Below about 32°C, sodium sulfate decahydrate is recovered. This compound contains 57.5% water by weight and obviously possesses the disadvantageous characteristic of having a greater weight in water than in the sodium sulfate removed for disposal.

In order to utilize the apparatus of this invention in an evaporative crystallization mode, the liquid waste solution is maintained at a temperature above 32°C during circulation through the crystallization unit. The temperature is preferably in the range of 43°C to 49°C to conserve energy and essentially boil off water under the vacuum in order to increase the sodium sulfate concentration above the solubility level.

The boil off rate and the circulation rate are controlled so that the crystals can settle in the crystallization unit rather than accumulate at the liquid vapor interface. In order to maintain the desired temperature during the evaporative crystallization mode, steam is supplied to the secondary side 11' of the heat exchanger 11. Once the sodium sulfate concentration is above the solubility level, precipitation and crystal growth occur as described in the evaporative cooling crystallization mode.

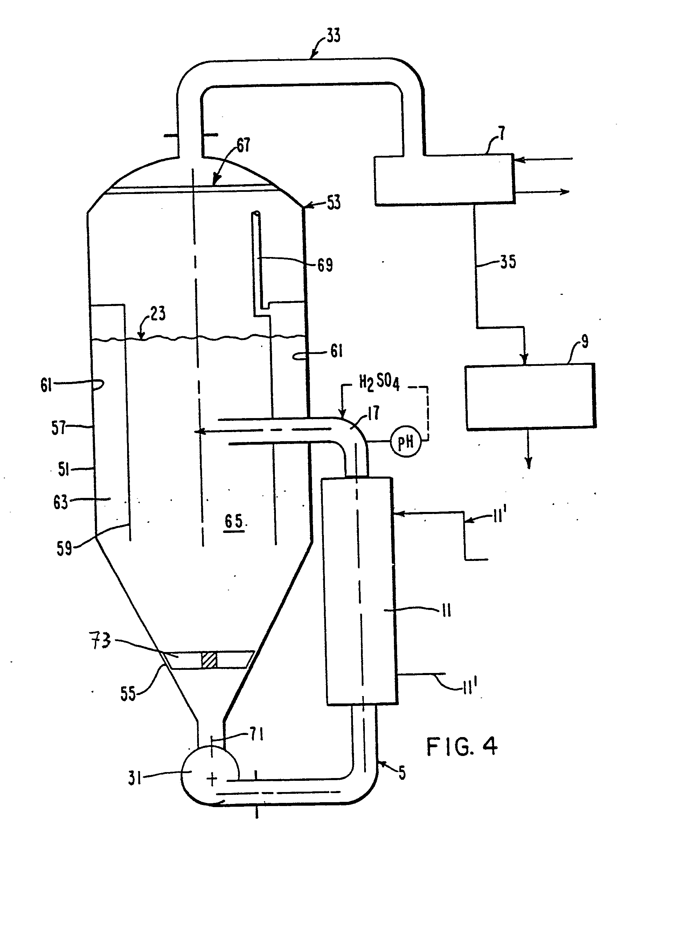

Turning now to Figure 4, it can be seen that the crystallization unit 3 includes a vertically disposed substantially cylindrical vessel 51, having an upper liquid-vapor interface portion 53, a lower conical portion 55 and a middle body portion 57 therebetween. An internal annular baffling means 59 is circumferentially diposed in a spaced relation with the inner wall 61 at the middle portion 57 of the crystallizer unit 3. The baffling means 59 defines an annular quiescent zone 63 where crystallization begins between the baffling means 59 and the inner vessel wall 61, and an inner chamber 65 within the baffling means 59. Feed pipe 17 passes through the quiescent zone 63 and is so situated in the inner chamber 65 that the liquid waste flow circulating through the feed pipe 17 re-enters tangentially into the inner chamber 65 tangentially to the baffling means and at a point about 45 cm (one and one-half feet) below the top of the baffling means 59. The reentry of the liquid waste flow well below the liquid vapor interface 23, prevents the disturbance of the interface.

The upper liquid-vapor interface portion 53 has a demister 67 which traps drops of solvent and other matter within the liquid waste solution which might become entrained by the vacuum induced vapor flow through line 33. The annular quiescent zone 63 is in communication with the upper portion 53 by vent means as at 69 in order to equalize the pressure in the two zones. Preferably, the liquid-vapor interface 23 is at a level below the top of the baffling means 59.

The lower conical portion 55 of the crystallization unit has an egress means 71 at the apex thereof through which first the liquid waste and, later when the desired density of the flow is achieved, the solid-liquid slurry are discharged. A swirl breaker 3 is installed in the lower reaches of the conical portion of the vessel. The swirl breaker 73 together with the tangential entry of the liquid waste into the inner chamber of the crystallization unit minimize the turbulence of the liquid waste within the crystallization unit. While not illustrated, it should be pointed out that the crystallization unit 3 can be skid mounted for plant installation and appropriately shielded and arranged for ready maintainability and ease in effecting decontamination procedures with minimum personnel exposure.

The circulating pump 31 should allow for a mixed rather than classified product circulation and should generate a waste flow velocity of between about 1.5 to 2.1 m/s. The heat exchanger 11 is preferably a straight tube heat exchanger in line with the circulation system. The maximum change in temperature in the heat exchanger should not exceed about 14 degrees centigrade and the maximum cooling and heating of the combined feed-circulation flow should be limited to 1.7 to 2.8 degrees centigrade. The secondary side 11' of the heat exchanger may be provided with either cooling water or plant steam as necessary in order to ensure that the proper temperature of the liquid waste flow is maintained.

Approximately 1900 l (five hundred gallons) of a 12% boric acid solution from the waste evaporator can be processed at a rate of 8 l to 11 l (two to three gallons) per minute in about four hours to yield a slurry discharge of about 65—70 percent solids by weight. A volume reduction factor of about 6:1 is achieved. This slurry concentration is equivalent to a crystal concentration of approximately 25 percent in the bulk fluid. The fluid returned to the system after condensation will contain approximately 5 to 6% boric acid in solution. As previously indicated, sodium sulfate wastes can also be treated in the process of this invention. For sodium sulfate wastes, concentrated to about 20 to 25 percent in the waste evaporator, the crystallization process will produce a 60 percent solid by weight sodium sulfate slurry. An approximate 3:1 volume reduction is achieved.

It should finally be noted that if for any reason it should become necessary to flush the crystallization system, plant steam can be injected into the secondary side of the heat exchanger 11 in order to heat the fluid stream in the system. The heated stream could then dissolve any undesired crystalline buildup in the system. The heated stream could then be cooled and processed according to this invention.

**Claims**

1. A process for the volume reduction of a radioactive liquid waste solution, wherein hot solution is introduced into a crystallization unit (3) and cooled to a temperature at which crystallization can occur, and a vacuum is applied to said unit to draw off at least some of the solvent in said solution as a vapor, characterized in that said liquid waste solution contains boric acid or sodium sulfate and an initial charge thereof is introduced into said crystallization unit (3) to fill said unit to a predetermined level, the solution in said unit being cooled to said temperature by circulating it through a cooler unit, and that, while said vacuum is maintained, further hot solution is introduced into said crystallization unit to compensate for the evaporated solvent loss and to maintain said predetermined level until the solution becomes supersaturated and a slurry is generated whereupon circulation of the solution is discontinued while vacuum is maintained to promote crystallization and settling of the crystals formed which are then transferred to a solidification system.

2. A process according to claim 1, characterized in that the solution is circulated from the bottom of said unit through a pipe in communication with a heat exchanger and back into said unit for cooling the hot liquid waste in said heat exchanger, circulation of the fluid inhibiting the crystallization of said supersaturated solution in said pipe and heat exchanger.

3. A process according to claim 2, characterized in that temperature reduction of the initial charge of the hot solution is effected by both the application of vacuum for evaporative cooling and circulation of the solution through the heat exchanger.

4. A process according to claim 3, characterized in that the further hot solution is introduced upstream of the heat exchanger and the temperature of said further solution is reduced in the heat exchanger.

5. The process according to claim 4, wherein the density of the solution circulating through the crystallization unit is monitored; the circulation is stopped when the monitored concentration reaches a predetermined level so that the crystals settle in the crystallization unit to form a solid-liquid slurry; which is removed from the crystallization unit.

6. A process according to claim 5, characterized in that the predetermined level of concentration of crystals with the crystallization unit is maintained between 20 to 30% by volume.

7. The process according to claim 1, wherein said waste is liquid sodium sulfate waste solution and said waste solution is maintained at a temperature above 32°C.

8. A process according to claim 7, characterized in that the liquid sodium sulfate waste solution is maintained at a temperature between 43°C and 49°C.

9. A process according to any of claims 2 to 7, wherein the crystallization unit has an inner chamber and a quiescent zone separated by a baffling means is provided within the crystallization unit, characterized in that circulating solution is introduced into said inner chamber tangentially relative to said baffling means.

10. A process according to claim 9, characterized in that the predetermined level to which the crystallizer unit is filled is no higher than the baffling means within the crystallization unit.

11. A process according to any of claims 1 to 10, characterized in that the pH of the waste solution is monitored during its circulation through the pipe and the pH is adjusted so as to maintain the conditions suitable for crystal formation.

12. A process according to claim 11, characterized in that the pH of the solution is maintained at a level of no greater than 5 for boric acid waste.

· 13. An apparatus for performing the method according to any of claims 1 to 12 comprising a vertically disposed substantially cylindrical vessel (3) having an inner surface, an enclosed upper liquid-vapor interface portion having egress means (33) therein for the withdrawal of the vapor from said upper portion, a lower conical portion (27) having egress means (5) at the apex thereof for the discharge of the liquid waste and the slurry from said vessel (3) and a middle body portion (29) therebetween, characterized in that a continuous annular baffling means is circumferentially disposed in a spaced relation to the inner wall of said vessel (3) within said middle body portion (29) defining?a quiescent zone between said baffling means and said inner surface of said vessel (3) at said middle body portion (29) and an inner chamber within said baffling means; means (13, 19) are provided for the introduction of said liquid waste into said inner chamber (29) tangentially relative to said baffling means and means (31, 5) for the circulation of said liquid waste from the egress of the conical portion to the inner chamber, that a heat exchanger (11) is disposed in the circulation means to permit cooling of said hot liquid waste to about the temperature of crystallization thereof; and a vacuum means (9) is provided in communication with the vapor egress means (33) in the enclosed upper portion to effect the withdrawal of the vapor from the liquid waste, said vacuum means reducing the amount of solvent in said solution so that said liquid solution is driven into supersaturation within the crystallization unit quiescent zone, the circulation of fluid through said crystallization unit and said pipe inhibiting undesirable crystal formation in the heat exchanger, pump and pipe.

14. An apparatus according to claim 13, characterized in that the upper liquid-vapor interface portion includes a demister (67) through which the vapor withdrawn from the upper portion passes.

15. An apparatus according to claim 14, characterized in that the lower conical portion includes a swirl breaker (73) mounted therein to control any turbulence of the solution therein.

16. An apparatus according to claim 13, 14 or 15, characterized in that means for monitoring and means for adjusting the pH of the solution entering the inner chamber of the vessel are provided.

**Patentansprüche**

1. Verfahren zur Volumenverminderung einer radioaktiven flüssigen Abfallösung, wobei heiße Lösung in eine Kristallisationseinheit (3) eingeleitet und auf eine Temperatur abgekühlt wird, bei welcher Kristallisation auftreten kann, und wobei ein Vakuum an diese Einheit angelegt wird, um mindestens einen Teil des Lösungsmittels in dieser Lösung als Dampf abzuziehen, dadurch gekennzeichnet, daß die flüssige Abfallösung Borsäure oder Natriumsulfat enthält und daß eine anfängliche Charge davon in die Kristallisationseinheit (3) eingebracht wird, um diese Einheit bis auf einen vorgegebenen Pegel zu füllen, daß dann die Lösung in dieser Einheit durch Zirkulieren der Lösung durch eine Kühlereinheit auf die genannte Temperatur abgekühlt wird, und daß, während das genannte Vakuum aufrechterhalten wird, weitere heiße Lösung in die Kristallisationseinheit eingeleitet wird, um den Verlust an verdampftem Lösungsmittel auszugleichen und den vorgegebenen Pegel aufrechtzuerhalten, bis die Lösung übersättigt wird und ein Schlamm erzeugt wird, worauf die Zirkulation der Lösung abgebrochen wird, während das Vakuum weiter aufrechterhalten wird, um die Kristallisation und das Absetzen der gebildeten Kristalle zu begünstigen, die dann zu einem Verfestigungssystem überführt werden.

2. Verfahren nach Anspruch 1, dadurch gekennzeichnet, daß die Lösung vom Boden der genannten Einheit durch eine mit einem Wärmetauscher in Verbindung stehende Rohrleitung und wieder in die genannte Einheit zurück zirkuliert wird, um den heißen flüssigen Abfall in dem Wärmetauscher abzukühlen, wobei die Zirkulation der Flüssigkeit eine Kristallisation der übersättigten Lösung in der Rohrleitung und im Wärmetauscher verhindert.

3. Verfahren nach Anspruch 2, dadurch gekennzeichnet, daß die Temperaturverringerung der anfänglichen Charge der heißen Lösung sowohl durch das Anlegen des Vakuums zur Verdampfungskühlung als auch durch die Zirkulation der Lösung durch den Wärmetauscher erfolgt.

4. Verfahren nach Anspruch 3, dadurch gekennzeichnet, daß die weitere heiße Lösung stromauf des Wärmetauschers eingeleitet und die Temperatur dieser weiteren Lösung im Wärmetauscher verringert wird.

5. Verfahren nach Anspruch 4, wobei die Dichte der durch die Kristallisationseinheit zirkulierten Lösung überwacht und die Zirkulation beendet wird, wenn die überwachte Konzentration einen vorgegebenen Wert erreicht, so daß die Kristalle sich in der Kristallisationseinheit zur Bildung eines fest-flüssigen Schlammes absetzen, der aus der Kristallisationseinheit abgeführt wird.

6. Verfahren nach Anspruch 5, dadurch gekennzeichnet, daß der vorgegebene Konzentrationswert der Kristalle in der Kristallisationseinheit zwischen 20 und 30 Volumenprozent gehalten wird.

7. Verfahren nach Anspruch 1, wobei der Abfall eine flüssige Natriumsulfat-Abfallösung ist und diese Abfallösung auf einer Temperatur oberhalb von 32°C gehalten wird.

8. Verfahren nach Anspruch 7, dadurch gekennzeichnet, daß die flüssige Natrium sulfat-Abfallösung auf einer Temperatur zwischen 43°C und 49°C gehalten wird.

9. Verfahren nach einem der Ansprüche 2 bis 7, wobei die Kristallisationseinheit eine innere Kammer aufweist und eine davon durch eine Trennwand abgeteilte ruhige Zone innerhalb der Kristallisationseinheit vorgesehen ist, dadurch gekennzeichnet, daß zirkulierende Lösung tangential mit Bezug auf die Trennwand in die innere Kammer eingeleitet wird.

10. Verfahren nach Anspruch 9, dadurch gekennzeichnet, daß der vorgegebene Pegel, bis zu welchem die Kristallisationseinheit gefüllt wird, nicht höher als die Trennwand innerhalb der Kristallisationseinheit ist.

11. Verfahren nach einem der Ansprüche 1 bis 10, dadurch gekennzeichnet, daß der pH-Wert der Abfallösung während ihrer Zirkulation durch die Rohrleitung überwacht und der pH-Wert so eingestellt wird, daß für eine Kristallbildung geeignete Bedingungen aufrechterhalten werden.

12. Verfahren nach Anspruch 11, dadurch gekennzeichnet daß der pH-Wert der Lösung auf keinem höheren Wert als 5 für Borsäureabfall gehalten wird.

13. Einrichtung zur Durchführung des Verfahrens nach einem der Ansprüche 1 bis 12 mit einem vertikal orientiertem, im wesentlichen zylindrischen Behälter (3) mit einer Innenwandfläche, einem darin eingeschlossenen oberen Flüssigkeits/Dampf-Grenzabschnitt mit Auslaßmitteln (33) zum Abziehen des Dampfes auf diesem oberen Abschnitt, einem konischen unteren Abschnitt (27) mit an dessen Scheitel befindlichen Auslaßmitteln (5) zum Abziehen des flüssigen Abfalls und des Schlammes aus dem Behälter (3), und mit einem dazwischenliegenden Mittelabschnitt (29), dadurch gekennzeichnet, daß eine durchlaufende ringförmige Trennwand umfangsmäßig mit Abstand von der Innenwand des Behälters (3) innerhalb des Mittelabschnitts (29) angeordnet ist, die eine ruhige Zone zwischen der Trennwand und der Innenwandfläche des Behälters (3) in dessen Mittelbereich (29) und eine innere Kammer innerhalb der Trennwand bildet, daß weiter Mittel (13, 19) zum bezüglich der Trennwand tangentialen Einleiten des flüssigen Abfalls in die innere Kammer (29) und Mittel (31, 5) zum Zirkulieren des flüssigen Abfalls vom Auslaß des konischen Abschnitts zu der inneren Kammer vorgesehen sind, daß ferner ein Wärmetauscher (11) in den Zirkulationsmitteln angeordnet ist, um eine Kühlung des heißen flüssigen Abfalls auf etwa die Kristallisationstemperatur zu ermöglichen, und daß ein Vakuumerzeuger (9) vorgesehen ist, der mit den Dampfauslaßmitteln (33) im oberen Abschnitt in Verbindung steht, um das Abziehen des Dampfes aus dem flüssigen Abfall zu bewirken, derart, daß der Vakuumerzeuger die Menge des Lösungsmittels in der Lösung verringert und die flüssige Lösung innerhalb der ruhigen Zone der Kristallisationseinheit in die Übersättigung gebracht wird, während die Zirkulation der Flüssigkeit durch die Kristallisationseinheit und die Rohrleitung eine unerwünschte Kristallbildung im Wärmeaustauscher, in der Pumpe und in der Rohrleitung verhindert.

14. Einrichtung nach Anspruch 13, dadurch gekennzeichnet, daß der obere Flüssigkeits/Dampf-Grenzabschnitt einen Tropfenabscheider (67) enthält, durch welchen der aus dem oberen Abschnitt abgezogene Dampf hindurchpassiert.

15. Einrichtung nach Anspruch 14, dadurch gekennzeichnet, daß der untere konische Abschnitt einen darin eingebauten Drallabschwächer (73) enthält, um Turbulenzen in der darin befindlichen Lösung zu beherrschen.

16. Einrichtung nach Anspruch 13, 14 oder 15, dadurch gekennzeichnet, daß Mittel zum Überwachen und Mittel zum Einstellen des pH-Werts der in die innere Kammer des Behälters eintretenden Lösung vorgesehen sind.

**Revendications**

1. Procédé pour réduire le volume d'une solution de déchets liquides radioactifs, dans lequel la solution chaude est introduite dans une installation de cristallisation (3) et refroidie jusqu'à une température à laquelle puisse se produire une cristallisation, et un vide est créé dans ladite installation pour retirer sous forme de vapeur au moins une partie du solvant de la solution, caractérisé en ce que la solution de déchets liquides contient de l'acide borique ou du sulfate de sodium et en ce qu'une charge initiale de ceux-ci est introduite dans l'installation de cristallisation (3) pour remplir ladite installation jusqu'à un niveau prédéterminé, la solution dans ladite installation étant refroidie jusqu'à ladite température par circulation à travers une unité de refroidissement et en ce que, pendant que le vide est maintenu, on introduit un complément de solution chaude dans l'installation de cristallisation pour compenser la perte de solvant évaporé et pour maintenir ledit niveau prédéterminé jusqu'à ce que la solution devienne sursaturée et qu'il se crée une boue, moment auquel la circulation de la solution est interrompue tandis que le vide est maintenu pour favoriser la cristallisation et la précipitation des cristaux formés qui sont ensuite transférés dans un système d'enrobage.

2. Procédé selon la revendication 1, caractérisé en ce qu'on fait circuler la solution depuis le fond de ladite installation via une conduite communiquant avec un échangeur de chaleur et on la fait revenir dans ladite installation pour refroidir les déchets liquides chauds dans l'échangeur de chaleur, la circulation du fluide interdisant la cristallisation de ladite solution sursaturée dans la conduite et l'échangeur de chaleur.

3. Procédé selon la revendication 2, caractérisé en ce que la réduction de la température de la charge initiale de la solution chaude s'effectue à la fois par la création de vide pour le refroidissement par évaporation et par la circulation de la solution à travers l'échangeur de chaleur.

4. Procédé selon la revendication 3, caractérisé en ce que le complément de solution chaude est introduit en amont de l'échangeur de chaleur et la température dudit complément de solution est réduite dans l'échangeur de chaleur.

5. Procédé selon la revendication 4, dans lequel la densité de la solution circulant à travers l'installation de cristallisation est contrôlée; la circulation est arrêtée quand la concentration contrôlée atteint un niveau prédéterminé afin que les cristaux précipitent dans l'installation de cristallisation pour former une boue solide-liquide, laquelle est retirée de l'installation de cristallisation.

6. Procédé selon la revendication 5, caractérisé en ce que le niveau prédéterminé de concentration de cristaux dans l'installation de cristallisation est maintenu entre 20 et 30% en volume.

7. Procédé selon la revendication 1, dans lequel lesdits déchets sont une solution de déchets liquides contenant du sulfate de sodium et ladite solution de déchets est maintenue à une température supérieure à 32°C.

8. Procédé selon la revendication 7, caractérisé en ce que la solution de déchets liquides contenant du sulfate de sodium est maintenue à une température de 43°C à 49°C.

9. Procédé selon l'une quelconque des revendications 2 à 7, dans lequel l'installation de cristallisation comporte une chambre interne et une zone de repos séparée par un moyen de cloisonnement est réalisée dans l'installation de cristallisation, caractérisé en ce que la solution en circulation est introduite dans ladite chambre interne tangentiellement audit moyen de cloisonnement.

10. Procédé selon la revendication 9, caractérisé en ce que le niveau prédéterminé auquel est remplie l'installation de cristallisation n'est pas plus haut que le moyen de cloisonnement dans l'installation de cristallisation.

11. Procédé selon l'une quelconque des revendications 1 à 10, caractérisé en ce que le pH de la solution de déchets est contrôlé pendant sa circulation à travers la conduite et le pH est ajusté de manière à maintenir les conditions propices à la formation de cristaux.

12. Procédé selon la revendication 11, caractérisé en ce que le pH de la solution est maintenu à un niveau non supérieur à 5 pour les déchets contenant de l'acide borique.

13. Appareil pour mettre en oeuvre le procédé selon l'une quelconque des revendications 1 à 12, comprenant une cuve (3) sensiblement cylindrique disposée verticalement possédant une surface interne, une partie supérieure close pour interface liquide-vapeur dans laquelle se trouve un moyen de sortie (33) pour évacuer la vapeur hors de ladite partie supérieure, une partie inférieure conique (27) à la pointe de laquelle se trouve un moyen de sortie (5) pour le déchargement des déchets liquides et de la boue hors de la cuve (3) et une partie intermédiaire formant corps (29) entre celles-ci, caractérisé en ce qu'un moyen de cloisonnement annulaire continu est disposé circonférentiellement de manière espacée par rapport à la paroi interne de la cuve (3) à l'intérieur de la partie intermédiaire formant corps (29) en définissant une zone de repos entre ledit moyen de cloisonnement et ladite surface interne de la cuve (3) au niveau de la partie intermédiaire formant corps (29) et une chambre interne dans le moyen de cloisonnement; des moyens (13, 19) sont prévus pour l'introduction des déchets liquides dans la chambre interne (29) tangentiellement audit moyen de cloisonnement et aux moyens (31, 5) pour la circulation des déchets liquides depuis la sortie de la partie conique jusqu'à la chambre interne, en ce qu'un échangeur (11) de chaleur est disposé dans les moyens de circulation pour permettre le refroidissement des déchets liquides chauds à peu près jusqu'à la température de cristallisation de ceux-ci; et un moyen (9) de création de vide est réalisé en communication avec le moyen (33) de sortie de vapeur dans la partie supérieure close pour effectuer l'évacuation de la vapeur depuis les déchets liquides, ledit moyen de création de vide réduisant la quantité de solvant dans la solution de façon que la solution liquide soit amenée en état de sursaturation dans la zone de repos de l'installation de cristallisation, la circulation de fluide dans l'installation de cristallisation et la conduite empêchant la formation indésirable de cristaux dans l'échangeur de chaleur, la pompe et la conduite.

14. Appareil selon la revendication 13, caractérisé en ce que la partie supérieure pour interface liquide-vapeur comporte un dispositif anti-buée (67) par lequel passe la vapeur extraite de la partie supérieure.

15. Appareil selon la revendication 14, caractérisé en ce que la partie inférieure conique comporte un brise-tourbillons (73) monté dans celle-ci pour éviter toute turbulence de la solution dans celle-ci.

16. Appareil selon la revendication 13, 14 ou 15, caractérisé en ce que sont réalisés un moyen pour contrôler et un moyen pour ajuster le pH de la solution entrant dans la chambre interne.

0 070 989

FIG. I

1

TYPICAL WASTE STREAM SOLUBILITY CURVE

FIG. 2

SOLUBILITY CURVE SODIUM SULFATE

FIG. 3

FIG. 4